# EUROPEAN PATENT APPLICATION

(11) **EP 4 509 333 A1**
(43) Date of publication of application: **19.02.2025**
(21) Application number: 23787501.8
(22) Date of filing: 27.03.2023
(51) Int. Cl.: B60D 1/01, B60R 19/48

(54) **HITCH BALL ASSEMBLY FOR VEHICLE AND VEHICLE**

(30) Priority: 15.04.2022 CN 202220876578 U
(71) Applicant: Nio Technology (Anhui) Co., Ltd, Hefei City, Anhui 230601 (CN)
(72) Inventor: LIU, Yuxuan, Shanghai 201804 (CN); SHI, Wenhui, Shanghai 201804 (CN); PAN, Mingyue, Shanghai 201804 (CN); CHENG, Ming, Shanghai 201804 (CN); SHEN, Ke, Shanghai 201804 (CN); WANG, Hongli, Shanghai 201804 (CN)
(74) Representative: Vossius & Partner Patentanwälte Rechtsanwälte mbB
(86) International application number: PCT/CN2023/084130
(87) International publication number: WO 2023/197855

(57) **Abstract**

A tow hitch assembly (1) for a vehicle, comprising: a tubular beam (10) suitable for being mounted to a rear portion of a vehicle and having a tubular beam body (11) extending in the left-right direction of the vehicle; and at least one anti-flip member (40), the at least one anti-flip member being fixed on an outer peripheral wall (111) of the tubular beam body and being provided with an anti-flip plane (400), and the anti-flip member being suitable for being clamped by a predetermined clamping device and preventing the tubular beam body from flipping over relative to the predetermined clamping device by means of the anti-flip plane. Further, a vehicle comprising a tow hitch assembly is provided. By using the tow hitch assembly, the vehicle can effectively clamp the tow hitch assembly so as to avoid the slippage of the tow hitch assembly, improve the assembly efficiency, and reduce the risk of safety accidents. Meanwhile, the problems of strength reduction and corrosion protection caused by forming holes in the tubular beam can also be solved.

## Description

### CROSS-REFERENCE TO RELATED APPLICATIONS

This patent application claims the priority to Chinese Patent Application No. CN 202220876578.3, filed on April 15, 2022, entitled "TOW HITCH ASSEMBLY FOR VEHICLE, AND VEHICLE", which is incorporated herein by reference in its entirety.

### TECHNICAL FIELD

The invention relates to the technical field of vehicles, and in particular to a tow hitch assembly for a vehicle, and the vehicle.

### BACKGROUND ART

A tow hitch (also known as a hitch ball), which is generally arranged at a rear portion of a vehicle, is an important towing apparatus for the vehicle, has a main function of hooking a tow rope or a tow bar to facilitate rescue by a tow truck, and can also haul external equipment, such as a rear-mounted bike carrier or a trunk, to increase a loading space of the vehicle. In recent years, with the rise of long-distance self-driving tours, the tow hitch has gained increasing attention and favor.

The tow hitch in the prior art is typically fixed to a longitudinal beam or a cross beam of the vehicle so as to ensure the tow hitch having adequate towing capacity and also to avoid damage to a vehicle body in a towing process. During actual assembly, a tow hitch assembly (also known as a tow hitch system) is typically first formed by fixing a tow hitch to a tubular beam, and then the tubular beam is clamped by a clamping device (e.g. a mechanical arm, etc.) to move and position the tow hitch assembly at a predetermined mounting position of the vehicle and then fix the tow hitch assembly to the vehicle body. Due to the heavy weight of the entire tow hitch assembly (typically 30 kg-40 kg), it is difficult for the clamping device to effectively clamp the tubular beam, causing the tubular beam to be extremely prone to relative flipping and slippage. In this way, the assembly efficiency is greatly affected, the tow hitch assembly is also prone to crushing the vehicle body in event of the assembly being detached from a predetermined clamping device, or even safety accidents are caused.

Therefore, there is a need for a novel technical solution in the art to solve the problems described above.

### SUMMARY

In order to improve or solve, to some extent, the technical problem in the prior art of being difficult to effectively clamp a tow hitch assembly for a vehicle, the invention provides a tow hitch assembly for a vehicle. The tow hitch assembly comprises: a tubular beam that is suitable for being mounted to a rear portion of the vehicle and has a tubular beam body extending in the left-right direction of the vehicle; and at least one anti-flip member that is fixed on an outer peripheral wall of the tubular beam body and provided with an anti-flip plane, the anti-flip member being suitable for being clamped by a predetermined clamping device and preventing the tubular beam body from flipping over relative to the predetermined clamping device by means of the anti-flip plane.

The tow hitch assembly for a vehicle of the invention comprises the tubular beam and the at least one anti-flip member. The tubular beam has the tubular beam body extending in the left-right direction of the vehicle (i.e., in a Y direction of the vehicle in an assembled state). At least one anti-flip member is fixed on the outer peripheral wall of the tubular beam body, and each anti-flip member has one corresponding anti-flip plane, such that when the anti-flip member is clamped by the predetermined clamping device, the anti-flip plane can prevent the tubular beam body from flipping over relative to the predetermined clamping device. Therefore, the flipping and slippage can be effectively prevented when the tow hitch assembly of the invention is clamped by the predetermined clamping device, so as to improve the assembly efficiency, avoid the slippage from the predetermined clamping device, and reduce the risk of safety accidents. Moreover, compared with the technical solution of effectively clamping the tubular beam body by the predetermined clamping device by means of forming a through hole in the tubular beam, the tow hitch assembly of the invention can solve the problems of strength reduction and corrosion protection caused by forming a hole in the tubular beam. It should be noted that if the through hole is formed in the tubular beam, it is necessary to add a corrosion protection process in order to ensure that the tubular beam has good corrosion resistance. However, in order to take into account the strength of the tubular beam body, the size of the through hole cannot be excessively large, otherwise it is difficult to completely cover an inner wall of the tubular beam body with an anti-corrosive electrophoretic liquid and accordingly it is difficult to ensure an anti-corrosion effect.

In the above-described preferred technical solution of the tow hitch assembly for a vehicle, the at least one anti-flip member comprises a left anti-flip member and a right anti-flip member that are symmetrically arranged relative to a central plane perpendicular to the tubular beam body. With the arrangement of the left anti-flip member and the right anti-flip member symmetrical mutually relative to the central plane perpendicular to the tubular beam body, the predetermined clamping device can stably clamp the tubular beam body, thereby avoiding stress nonuniformity.

In the above-described preferred technical solution of the tow hitch assembly for a vehicle, each of the left anti-flip member and the right anti-flip member is configured as a sheet-like structure, an L-shaped structure or an Ω-shaped structure. With the above arrangement, the product types of the anti-flip member can be enriched, and the clamping requirements of different tubular beams can be met.

In the above-described preferred technical solution of the tow hitch assembly for a vehicle, each of the left anti-flip member and the right anti-flip member is fixed to a lower side or a rear side of the outer peripheral wall. Each of the left anti-flip member and the right anti-flip member is fixed to the lower side or the rear side of the outer peripheral wall, so that the predetermined clamping device can conveniently clamp the left anti-flip member and the right anti-flip member to avoid the interference between the predetermined clamping device and the vehicle body.

In the above-described preferred technical solution of the tow hitch assembly for a vehicle, the tow hitch assembly further comprises: a fixing bracket that is arranged at each of the left end and the right end of the tubular beam body and configured to be fixed to the rear portion of the vehicle. With the arrangement of the fixing bracket, the tubular beam body can be conveniently fixed to the vehicle body.

In the above-described preferred technical solution of the tow hitch assembly for a vehicle, the fixing bracket comprises a left fixing bracket and a right fixing bracket that are symmetrically arranged relative to the central plane perpendicular to the tubular beam body. With the above arrangement, the fixing bracket can be stressed more uniformly.

In the above-described preferred technical solution of the tow hitch assembly for a vehicle, each of the left fixing bracket and the right fixing bracket comprises: a main fixing bracket that has a main bracket body parallel to the central plane and a main fixing foot extending perpendicularly from the main bracket body in a direction away from the central plane, the main bracket body and the outer peripheral wall jointly enclosing a closed cavity. With the above arrangement, the main fixing bracket can have a simple structure and is convenient to machine. In addition, the main bracket body and the outer peripheral wall of the tubular beam body enclose the closed cavity, so that noises produced by foreign matters (e.g., stones on a road, etc.) entering the tubular beam body can be avoided, and the strength of the tubular beam body can also be ensured.

In the above-described preferred technical solution of the tow hitch assembly for a vehicle, each of the left fixing bracket and the right fixing bracket further comprises: an auxiliary fixing bracket, the auxiliary fixing bracket and the main fixing bracket being spaced apart from each other along a center line of the tubular beam body, and the auxiliary fixing bracket comprising an auxiliary bracket body parallel to the central plane and an auxiliary fixing foot extending perpendicularly from the auxiliary bracket body in a direction close to the central plane. With the arrangement of the auxiliary fixing bracket, the firmness of the entire tow hitch assembly fixed to the vehicle body can further be enhanced, and the towing capacity can thus be improved.

In the above-described preferred technical solution of the tow hitch assembly for a vehicle, each of the main fixing foot and the auxiliary fixing foot is provided with a plurality of mounting holes that are capable of matching the corresponding mounting members, and at least one of the main fixing foot and the auxiliary fixing foot is provided with a pre-hitching hole that is capable of matching a corresponding pre-hitching member. With the arrangement of the mounting holes, the fixing bracket can be firmly fixed to the vehicle body. With the arrangement of the pre-hitching holes, the tow hitch assembly can be conveniently pre-hung on the vehicle body during assembly to improve the assembly efficiency.

In the above-described preferred technical solution of the tow hitch assembly for a vehicle, the tow hitch assembly comprises a tow hitch fixed to the middle of the tubular beam body, the tow hitch being a rotatable electric tow hitch. The tow hitch is arranged in the middle of the tubular beam body, so that an external apparatus can be conveniently towed. Furthermore, the tow hitch is configured as the rotatable electric tow hitch, so that the level of automatic control of the tow hitch can also be increased, and the use experience of a user can be improved.

In the above-described preferred technical solution of the tow hitch assembly for a vehicle, a plurality of wire clips spaced apart from one another are provided on the tubular beam body along the center line of the tubular beam body, and each of the wire clips is configured to be capable of fixing a wiring harness connected to the electric tow hitch. With the arrangement of the plurality of wire clips spaced apart from one another on the tubular beam body, the wiring harness connected to the electric tow hitch can be conveniently restrained, and thus the wiring harness can be prevented from hitting against a rear bumper of the vehicle to cause an abnormal noise when the vehicle is running and the tow hitch is working.

In order to improve or solve, to some extent, the technical problem in the prior art of being difficult to effectively clamp a tow hitch assembly for a vehicle, the invention further provides a vehicle. The vehicle comprises a tow hitch assembly for a vehicle according to any one of the above-described technical solutions. By using the tow hitch assembly for a vehicle according to any one of the above-described technical solutions, the vehicle of the invention can effectively clamp the tow hitch assembly so as to avoid the slippage of the tow hitch assembly, improve the assembly efficiency, and reduce the risk of safety accidents.

In the above-described preferred technical solution of the vehicle, the tubular beam of the tow hitch assembly is a rear anti-collision beam of the vehicle. By configuring the tubular beam of the tow hitch assembly as the rear anti-collision beam of the vehicle, the towing requirements of the tow hitch can be met, and simplified components and an optimized configuration can also be achieved.

In the above-described preferred technical solution of the vehicle, the fixing bracket of the tow hitch assembly is fixed to a longitudinal beam of the vehicle. By fixing the fixing bracket of the tow hitch assembly to the longitudinal beam of the vehicle, a longitudinal (i.e., the front-rear direction of the vehicle) pull force to which the tow hitch assembly is subjected when towing the external apparatus can be transmitted to the longitudinal beam, thereby improving the towing capacity and also avoiding damage to the vehicle body.

### BRIEF DESCRIPTION OF THE DRAWINGS

Preferred implementations of the invention are described below with reference to the accompanying drawings, in which:
FIG. 1 is a schematic structural diagram of an embodiment of a tow hitch assembly for a vehicle according to the invention;
FIG. 2 is a first partial enlarged view of part A of the embodiment shown in FIG. 1 of the tow hitch assembly for a vehicle according to the invention;
FIG. 3 is a second partial enlarged view of part A of the embodiment shown in FIG. 1 of the tow hitch assembly for a vehicle according to the invention;
FIG. 4 is a third partial enlarged view of part A of the embodiment shown in FIG. 1 of the tow hitch assembly for a vehicle according to the invention; and
FIG. 5 is a fourth partial enlarged view of part A of the embodiment shown in FIG. 1 of the tow hitch assembly for a vehicle according to the invention.

List of reference signs:
1. Tow hitch assembly; 10. Tubular beam; 11. Tubular beam body; 111. Outer peripheral wall; 1111. Lower side; 1112. Rear side; 112. Wire clip; 1121. First wire clip; 1122. Second wire clip; 113. Left end; 114. Right end; 20. Tow hitch; 30. Fixing bracket; 30a. Left fixing bracket; 30b. Right fixing bracket; 31. Main fixing bracket; 311. Main bracket body; 312. Main fixing foot; 3121. Main fixing hole; 3122. Pre-hitching hole; 32. Auxiliary fixing bracket; 321. Auxiliary bracket body; 322. Auxiliary fixing foot; 3221. Auxiliary fixing hole; 40. Anti-flip member; 40a. Left anti-flip member; 40b. Right anti-flip member; 400. Anti-flip plane; 41. Sheet-like structure; 42. Ω-shaped structure; 43. L-shaped structure; 431. First flat plate; 432. Second flat plate.

### DETAILED DESCRIPTION OF EMBODIMENTS

The preferred implementations of the invention are described below with reference to the accompanying drawings. It should be understood by those skilled in the art that these implementations are only for explaining the technical principles of the invention and are not intended to limit the scope of protection of the invention.

It should be noted that, in the description of the invention, the terms that indicate the direction or positional relationship, such as "upper", "lower", "left", "right", "inner", and "outer", are based on the direction or positional relationship shown in the figures, which is merely for ease of description instead of indicating or implying that the device or element must have a particular orientation and be constructed and operated in a particular orientation, and therefore should not be construed as limiting the invention. In addition, the terms "first" and "second" are used for descriptive purposes only, and cannot be construed as indicating or implying relative importance.

In addition, it should also be noted that, in the description of the invention, the terms "dispose" and "connect" should be interpreted in a broad sense unless explicitly defined and limited otherwise. For example, a connection may be a fixed connection, a detachable connection, or an integral connection; and may be a direct connection, an indirect connection by means of an intermediary, or internal communication between two elements. For those skilled in the art, the specific meaning of the above-mentioned terms in the invention can be interpreted according to the specific situation.

In order to improve or solve, to some extent, the technical problem in the prior art of being difficult to effectively clamp a tow hitch assembly for a vehicle, the invention provides a tow hitch assembly 1 for a vehicle. The tow hitch assembly 1 comprises: a tubular beam 10, the tubular beam 10 having a tubular beam body 11 suitable for being mounted to a rear portion of the vehicle and extending in the left-right direction of the vehicle; and at least one anti-flip 40, the at least one anti-flip member 40 being fixed on an outer peripheral wall 111 of the tubular beam body 11 and being provided with an anti-flip plane 400, and the anti-flip member 40 being suitable for being clamped by a predetermined clamping device and preventing the tubular beam body 11 from flipping over relative to the predetermined clamping device by means of the anti-flip plane 400.

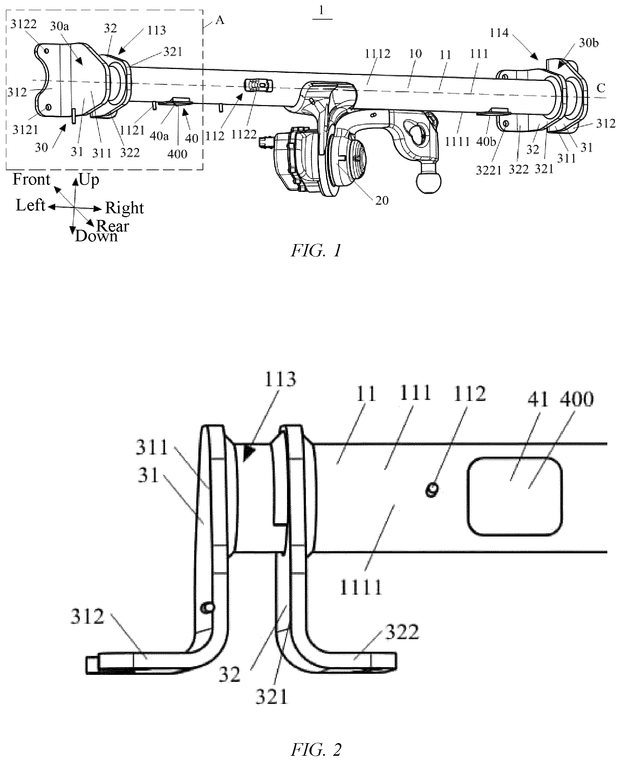

FIG. 1 is a schematic structural diagram of an embodiment of a tow hitch assembly for a vehicle according to the invention. As shown in FIG. 1, in one or more embodiments, a tow hitch assembly 1 for a vehicle of the invention comprises a tubular beam 10, a tow hitch 20, a fixing bracket 30, an anti-flip member 40, and other components.

As shown in FIG. 1, the tubular beam 10 has a tubular beam body 11 extending substantially in the left-right direction. That is, in an assembled state, the tubular beam body 11 extends in a Y direction of the vehicle to fix the tubular beam 10 to a rear portion of the vehicle. Alternatively, the tubular beam body 11 may also be configured to have other suitable shapes. The tubular beam body 11 is machined from a suitable steel material, so that the tubular beam body has good mechanical strength. Preferably, the tubular beam body 11 is a hollow tube, so that the weight of the tubular beam body 11 itself can be decreased on the premise of meeting the requirement of mechanical strength, and machining costs can be reduced. In one or more embodiments, the tubular beam body 11 has a substantially cylindrical outer peripheral wall 111 for ease of machining. Alternatively, the outer peripheral wall 111 may also be configured to have other suitable shapes, such as a square column shape. In one or more embodiments, a plurality of wire clips 112 spaced apart from one another along a center line C of the tubular beam body 11 are formed on the tubular beam body to restrain a wiring harness connected to the tow hitch 20 and to play a role of protecting the wiring harness. The wire clip 112 comprises a first wire clip 1121 and a second wire clip 1122. The first wire clip 1121 is configured as a columnar protrusion extending perpendicularly outwardly from the outer peripheral wall 111. It should be noted that the number of first wire clips 1121 may be adjusted according to actual needs, for example, 5, 6, 7, etc. The first wire clip 1121 may also be provided on the tow hitch 20 and the fixing bracket 30 according to actual needs to improve the stability of restraining the wiring harness. The second wire clip 1122 is arranged on a rear side 1112 of the outer peripheral wall 111 and located close to the tow hitch 20. The second wire clip 1122 substantially has a shape of Chinese character " 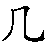 " to restrain in the second wire clip the wiring harness connected to the tow hitch 20.

As shown in FIG. 1, the tow hitch 20 is arranged in the middle of the tubular beam body 11. Specifically, the tow hitch 20 is fixed to a lower side 1111 of the outer peripheral wall 111 of the tubular beam body 11 and is located at a central position of the tubular beam body 11, so that the entire tow hitch assembly 1 has a stable structure. The tow hitch 20 may be machined from a suitable steel material, so that the tow hitch has good mechanical strength. In one or more embodiments, the tow hitch 20 is fixedly connected to the tubular beam body 11 by using a welding process. Alternatively, the tow hitch 20 and the tubular beam body 11 may also be connected by means of screwing or other suitable fixing methods. In one or more embodiments, the tow hitch 20 is a rotatable electric tow hitch. With the arrangement of the electric tow hitch, on the one hand, the level of automatic control can be increased, and the use experience of a user can be improved; on the other hand, when in an idle state, the tow hitch 20 can also be rotated to an initial position in which the tow hitch is attached to the tubular beam body 11, so that the tow hitch 20 is prevented from being exposed to the outside for a long period of time, thus improving the aesthetic level, and also achieving a certain protection effect.

As shown in FIG. 1, the fixing bracket 30 comprises a left fixing bracket 30a fixed to the left end 113 of the tubular beam body 11 and a right fixing bracket 30b fixed to the right end 114 thereof. The left fixing bracket 30a and the right fixing bracket 30b are arranged symmetrically relative to a central plane (not shown) perpendicular to the tubular beam body 11, so that the entire tow hitch assembly 1 has a symmetrical and regular structure, which enables the fixing bracket 30 to be uniformly stressed, and also enables the predetermined clamping device (e.g., a mechanical arm) to be more stable when clamping the tow hitch assembly 1.

With continued reference to FIG. 1, in one or more embodiments, each of the left fixing bracket 30a and the right fixing bracket 30b comprises a main fixing bracket 31. The main fixing bracket 31 comprises a main bracket body 311 and a main fixing foot 312 that are connected to each other. The main bracket body 311 and the main fixing foot 312 may be manufactured by using a suitable steel material and through a machining process to ensure the mechanical strength thereof. The main bracket bodies 311 extend substantially in a direction parallel to the central plane and are fixed to the left end and the right end (i.e., the left end 113 and the right end 114) of the tubular beam body 11. With the above-described arrangement, a closed cavity (not shown) is enclosed by the outer peripheral wall 111 of the tubular beam body 11 and the main bracket bodies 311 at the left end and the right end, so that noises produced by foreign matters entering the tubular beam body 11 can be avoided, and the mechanical strength of the tubular beam body 11 can also be ensured to meet a towing requirement. The main fixing foot 312 is configured to extend from a vertical edge of the main bracket body 311 in a direction away from the central plane. That is, the main fixing feet 312 at the left side and the right side extend away from each other. In one or more embodiments, a main fixing hole 3121 located at a lower side is formed in the main fixing foot 312 to match a fastener (not shown), so that the main fixing bracket 31 is fixedly connected to the vehicle body. The main fixing hole 3121 is a substantially circular through hole. The number of the main fixing holes 3121 may be set as 1, 2, 3, etc. The fastener includes, but is not limited to, a stud, a nut, etc. In one or more embodiments, the main fixing foot 312 is further formed with a pre-hitching hole 3122 located at an upper side to match a pre-hitching member (not shown) on the vehicle body, so that the entire tow hitch assembly 1 is pre-hitched to the vehicle body, and thus the assembly efficiency is increased. The pre-hitching hole 3122 is a kidney-shaped hole extending in the left-right direction to receive the pre-hitching member. Alternatively, the pre-hitching hole 3122 may also be configured to have other suitable shapes, for example, a circular hole, etc. The pre-hitching member may be a screw welded to the vehicle body to ensure the strength of the pre-hitching member.

With continued reference to FIG. 1, in one or more embodiments, each of the left fixing bracket 30a and the right fixing bracket 30b further comprises an auxiliary fixing bracket 32. The auxiliary fixing bracket 32 and the main fixing bracket 31 are spaced apart from each other along the center line C of the tubular beam body 11. The auxiliary fixing bracket 32 comprises an auxiliary bracket body 321 and an auxiliary fixing foot 322 that are connected to each other. The auxiliary bracket body 321 and the auxiliary fixing foot 322 may be manufactured by using a suitable steel material and through a machining process to ensure the mechanical strength thereof. The auxiliary bracket body 321 extends substantially in a direction parallel to the central plane and is welded to the tubular beam body 11, so as to ensure the reliability of connection between the auxiliary bracket body and the tubular beam body. The auxiliary fixing foot 322 is configured to extend from a vertical edge of the auxiliary bracket body 321 in a direction close to the central plane. That is, the auxiliary fixing feet 322 at the left side and the right side extend toward each other. In one or more embodiments, each auxiliary fixing foot 322 is provided with two auxiliary fixing holes 3221 vertically spaced apart from each other. Each auxiliary fixing hole 3221 is a substantially circular through hole to match the fastener, so as to secure the auxiliary fixing bracket 32 to the vehicle body. Preferably, the auxiliary fixing hole 3221 is configured to have the same shape as the main fixing hole 3121 in order to improve the adaptability of the fastener. Alternatively, the number of the auxiliary fixing holes 3221 may also be set as other suitable number value greater than or less than 2, for example, 1, 3, etc. In one or more embodiments, the pre-hitching hole 3122 may also be formed in the auxiliary fixing foot 322, such that the pre-hitching hole 3122 is more flexible in arrangement position.

As shown in FIG. 1, in one or more embodiments, the anti-flip member 40 comprises a left anti-flip member 40a and a right anti-flip member 40b symmetrically arranged relative to the central plane perpendicular to the tubular beam body 11. Each of the left anti-flip member 40a and the right anti-flip member 40b has a corresponding anti-flip plane 400, so that the predetermined clamping device can prevent the tubular beam body 11 from flipping over relative to the predetermined clamping device by means of the anti-flip planes 400. Alternatively, the number of the anti-flip members 40 may also be set as other suitable number value greater than or less than 2, for example, 1, 3, etc. The arrangement position of the anti-flip member 40 may also be adjusted according to actual needs, as long as the predetermined clamping device can clamp the tow hitch assembly 1 stably and firmly.

FIG. 2 is a first partial enlarged view of part A of the embodiment shown in FIG. 1 of the tow hitch assembly for a vehicle according to the invention. As shown in FIG. 2, in one or more embodiments, the anti-flip member 40 is of a sheet-like structure 41. The sheet-like structure 41 has a substantially rectangular shape with rounded chamfers. The sheet-like structure 41 may be machined from a suitable steel material by means of a stamping process. In one or more embodiments, the sheet-like structure 41 is fixed to the lower side 1111 of the outer peripheral wall 111 of the tubular beam body 11. A fixing method includes, but is not limited to, welding. In the assembled state, the anti-flip plane 400 of the sheet-like structure 41 substantially extends downwardly in a horizontal direction, so that the predetermined clamping device can stably support the entire tow hitch assembly 1 when abutting against the anti-flip plane 400. Compared with directly clamping the circular arc-shaped outer peripheral wall 111, the "line-to-surface contact" of the anti-flip plane 400 clamping the sheet-like structure 41 can be adjusted to "surface-to-surface contact", thereby increasing the contact area and enhancing the clamping reliability. Alternatively, the sheet-like structure 41 may also be fixed to the rear side 1112 of the outer peripheral wall 111 of the tubular beam body 11. In this case, the anti-flip plane 400 of the sheet-like structure 41 substantially extends toward the rear in a vertical direction.

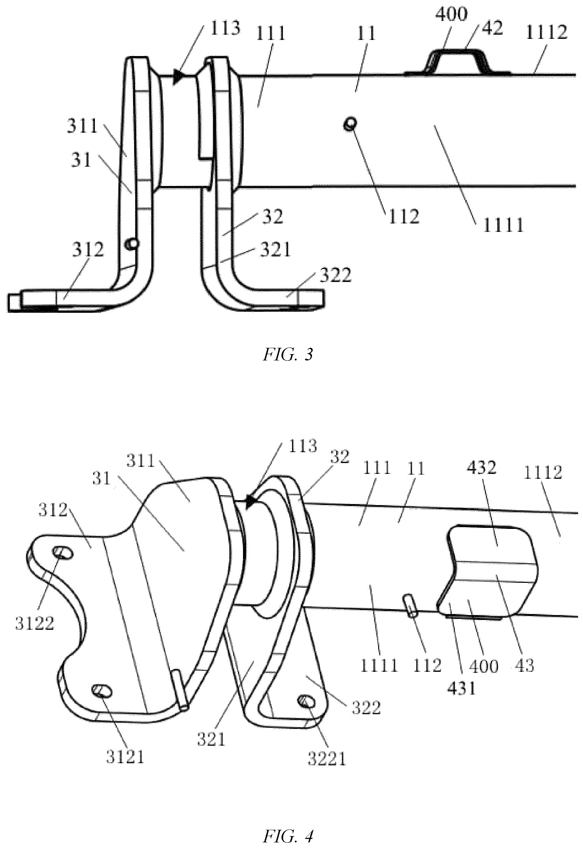

FIG. 3 is a second partial enlarged view of part A of the embodiment shown in FIG. 1 of the tow hitch assembly for a vehicle according to the invention. As shown in FIG. 3, in one or more embodiments, the anti-flip member 40 is of an Ω-shaped structure 42. The Ω-shaped structure 42 substantially has a shape of Chinese character " 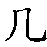 ". The Ω-shaped structure 42 may be machined from a suitable steel material by means of a stamping process. In one or more embodiments, the Ω-shaped structure 42 is fixed to the rear side 1112 of the outer peripheral wall 111 of the tubular beam body 11. A fixing method includes, but is not limited to, welding. In this case, the anti-flip plane 400 of the Ω-shaped structure 42 substantially extends toward the rear in the vertical direction. Alternatively, the Ω-shaped structure 42 may also be fixed to the lower side 1111 of the outer peripheral wall 111 of the tubular beam body 11. In this case, the anti-flip plane 400 of the Ω-shaped structure 42 substantially extends downwardly in the horizontal direction.

FIG. 4 is a third partial enlarged view of part A of the embodiment shown in FIG. 1 of the tow hitch assembly for a vehicle according to the invention. As shown in FIG. 4, in one or more embodiments, the anti-flip member 40 is of an L-shaped structure 43. The L-shaped structure 43 has a substantially "L"-shaped shape. The L-shaped structure 43 may be machined from a suitable steel material by means of a stamping process. In one or more embodiments, the L-shaped structure 43 comprises a first flat plate 431 and a second flat plate 432 that are connected to each other. The first flat plate 431 is fixed to the lower side 1111 of the outer peripheral wall 111 of the tubular beam body 11 and extends substantially in the horizontal direction. The second flat plate 432 is fixed to the rear side 1112 of the outer peripheral wall 111 and extends substantially in the vertical direction. A fixing method includes, but is not limited to, welding. The anti-flip plane 400 of the L-shaped structure 43 is composed of a lower surface of the first flat plate 431 and/or a rear surface of the second flat plate 432.

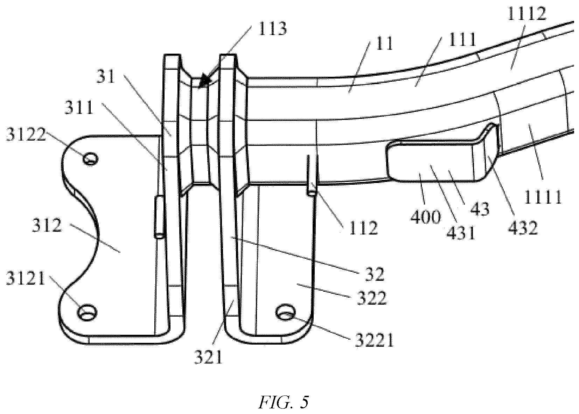

FIG. 5 is a fourth partial enlarged view of part A of the embodiment shown in FIG. 1 of the tow hitch assembly for a vehicle according to the invention. As shown in FIG. 5, in one or more embodiments, the tubular beam body 11 obliquely extends upwardly from the left end 113. The anti-flip member 40 is of an L-shaped structure 43. The L-shaped structure 43 has a substantially "L"-shaped shape. The L-shaped structure 43 may be machined from a suitable steel material by means of a stamping process. In one or more embodiments, the L-shaped structure 43 comprises a first flat plate 431 and a second flat plate 432 that are connected to each other. The first flat plate 431 is fixed to the lower side 1111 of the outer peripheral wall 111 of the tubular beam body 11 and extends substantially in the horizontal direction. The second flat plate 432 obliquely extends upwardly to the outer peripheral wall 111. In this case, the anti-flip plane 400 of the L-shaped structure 43 is the lower surface of the first flat plate 431. With the above-described arrangement, the product types of the anti-flip member 40 can be enriched, the clamping requirements of different tubular beams 10 can be met, the adaptability of the predetermined clamping device can be improved, and thus the assembly efficiency and machining costs can be increased.

The invention further provides a vehicle (not shown). The vehicle comprises a tow hitch assembly 1 for a vehicle described in any one of the above embodiments. In one or more embodiments, the vehicle is a car. Alternatively, the vehicle may also be an SUV, an MPV, or other suitable types of vehicles. The vehicle may be an electric vehicle, a fuel vehicle or a hybrid vehicle. In one or more embodiments, the tubular beam body 11 in the tow hitch assembly 1 is a rear anti-collision beam of the vehicle to simplify components and optimize configuration. In one or more embodiments, the fixing bracket 30 of the tow hitch assembly 1 is fixed to a longitudinal beam of the vehicle, such that the tow hitch assembly 1 can conveniently transmit a longitudinal pull force to the longitudinal beam when towing an external apparatus, thereby improving the towing capacity, and avoiding damage to the vehicle body.

Heretofore, the technical solutions of the invention have been described in conjunction with the preferred implementations shown in the drawings, however, those skilled in the art can readily understand that the scope of protection of the invention is obviously not limited to these specific implementations. Those skilled in the art could make equivalent changes or substitutions to the related technical features without departing from the principles of the invention, and all the technical solutions after the changes or the substitutions fall within the scope of protection of the invention.

## Claims

1. A tow hitch assembly for a vehicle, comprising:
a tubular beam that is suitable for being mounted to a rear portion of the vehicle and has a tubular beam body extending in the left-right direction of the vehicle; and
at least one anti-flip member that is fixed on an outer peripheral wall of the tubular beam body and provided with an anti-flip plane, the anti-flip member being suitable for being clamped by a predetermined clamping device and preventing the tubular beam body from flipping over relative to the predetermined clamping device by means of the anti-flip plane.

2. The tow hitch assembly for a vehicle according to claim 1, wherein the at least one anti-flip member comprises a left anti-flip member and a right anti-flip member that are symmetrically arranged relative to a central plane perpendicular to the tubular beam body.

3. The tow hitch assembly for a vehicle according to claim 2, wherein each of the left anti-flip member and the right anti-flip member is configured as a sheet-like structure, an L-shaped structure or an Ω-shaped structure.

4. The tow hitch assembly for a vehicle according to claim 3, wherein each of the left anti-flip member and the right anti-flip member is fixed to a lower side or a rear side of the outer peripheral wall.

5. The tow hitch assembly for a vehicle according to claim 1, wherein the tow hitch assembly further comprises:
a fixing bracket that is arranged at each of the left end and the right end of the tubular beam body and configured to be fixed to the rear portion of the vehicle.

6. The tow hitch assembly for a vehicle according to claim 5, wherein the fixing bracket comprises a left fixing bracket and a right fixing bracket that are symmetrically arranged relative to a central plane perpendicular to the tubular beam body.

7. The tow hitch assembly for a vehicle according to claim 6, wherein each of the left fixing bracket and the right fixing bracket comprises:
a main fixing bracket that has a main bracket body parallel to the central plane and a main fixing foot extending perpendicularly from the main bracket body in a direction away from the central plane, the main bracket body and the outer peripheral wall jointly enclosing a closed cavity.

8. The tow hitch assembly for a vehicle according to claim 7, wherein each of the left fixing bracket and the right fixing bracket further comprises:
an auxiliary fixing bracket, the auxiliary fixing bracket and the main fixing bracket being spaced apart from each other along a center line of the tubular beam body, and the auxiliary fixing bracket comprising an auxiliary bracket body parallel to the central plane and an auxiliary fixing foot extending perpendicularly from the auxiliary bracket body in a direction close to the central plane.

9. The tow hitch assembly for a vehicle according to claim 8, wherein each of the main fixing foot and the auxiliary fixing foot is provided with a plurality of mounting holes that are capable of matching the corresponding mounting members, and at least one of the main fixing foot and the auxiliary fixing foot is provided with a pre-hitching hole that is capable of matching a corresponding pre-hitching member.

10. The tow hitch assembly for a vehicle according to claim 1, wherein the tow hitch assembly comprises a tow hitch fixed to the middle of the tubular beam body, the tow hitch being a rotatable electric tow hitch.

11. The tow hitch assembly for a vehicle according to claim 10, wherein a plurality of wire clips spaced apart from one another are provided on the tubular beam body along a center line of the tubular beam body, and each of the wire clips is configured to be capable of fixing a wiring harness connected to the electric tow hitch.

12. A vehicle, comprising a tow hitch assembly for a vehicle according to any one of claims 1-11.

13. The vehicle according to claim 12, wherein a tubular beam of the tow hitch assembly is a rear anti-collision beam of the vehicle.

14. The vehicle according to claim 12 or 13, wherein a fixing bracket of the tow hitch assembly is fixed to a longitudinal beam of the vehicle.
